# EUROPEAN PATENT SPECIFICATION

(11) **EP 4 494 833 B1**
(45) Date of publication and mention of the grant of the patent: **09.12.2026**
(21) Application number: 24188242.2
(22) Date of filing: 12.07.2024
(51) Int. Cl.: B29B 17/00, B29B 17/02, B29B 17/04, B29B 7/66, B29B 7/88, B29B 9/12, B29B 7/42, B29B 9/06, B29L 31/00

(54) **METHOD FOR PRODUCING PLASTIC GRANULES FROM RECYCLING OF WASTE FABRICS AND/OR YARNS**
VERFAHREN ZUR HERSTELLUNG VON KUNSTSTOFFGRANULAT AUS DEM RECYCLING VON TEXTIL- UND/ODER FADENABFÄLLEN
MÉTHODE DE PRODUCTION DE GRANULÉS DE PLASTIQUE À PARTIR DU RECYCLAGE DE TISSUS ET/OU DE FILS USAGÉS

(30) Priority: 20.07.2023 IT 202300015267
(43) Date of publication of application: 22.01.2025
(73) Proprietor: Spin-Pet S.r.l., 56124 Pisa (IT)
(72) Inventor: BARTOLI, Flavia, 56124 Pisa (IT); BIANCHI, Sabrina, 56124 Pisa (IT); MINEI, Pierpaolo, 56124 Pisa (IT); PINNA, Michele, 56124 Pisa (IT)
(74) Representative: Leotta, Antonio

(56) References cited:
- EP-B1- 3 475 353
- WO-A1-2021/250228
- WO-A1-2022/112719
- WO-A1-2023/094456
- CN-A- 110 256 752

## Description

### TECHNICAL SECTOR OF THE INVENTION

The present invention concerns a method for obtaining granules of predominantly plastic material for use in manufacturing processes for processing plastics, starting from waste fabrics with a predominantly synthetic nature.

The invention concerns in particular a method for recycling textile products predominantly made of synthetic fibres such as clothing and linen used or discarded to produce granules of predominantly plastic material usable in common manufacturing processes for processing plastics such as extrusion, thermoforming or injection moulding processes.

### STATE OF THE ART

To date, the recycling of fabric or yarn waste both in synthetic materials such as polyester or polyamide, and in natural materials, such as cotton, silk and wool, always begins by fraying/grinding the fabrics to obtain fibre. This process has a significant impact on recycling costs (Interrex-RETEX-Results, https://www.dotheretex.eu/). In addition, the grinding and carding steps generate shorter fibre fractions than the originals. It is also important to distinguish between the mechanical recycling of non-coloured pre-consumer textile materials and that of coloured and post-consumer textiles. The first process is quite frequent for the preparation of "padding" or "filling" materials or for the production of nonwovens for mattresses, carpets, home or car insulation, sound-absorbing barriers, and sediment erosion control sheets, just to name a few. The second process, because of the degradation and contamination of the polymers that occur while using the fabrics, is reserved for low-value applications while it cannot be used for valuable applications and for fibre-to-fibre recycling. (Greenblue. Chemical Recycling: Making Fiber-to-Fiber Recycling a Reality for Polyester Textiles; Available online: http://greenblueorg.s3.amazonaws.com/smm/wp-content/uploads/2018/05/Chemical-Recycling-Making-Fiber-to-Fiber-Recycling-a-Reality-for-Polyester-Textiles-1.pdf)

In the thermomechanical recycling process, the thermoplastic synthetic textile waste, such as polyesters, polyamides and polyolefins, can be reworked through melt blending for regranulation, or the shredded and cleaned textile fluff can be extruded directly into fibres, in a one-step process.

However, this practice is operationally very complex due to the problems related to the presence of contaminations (not melted), the reduced density and therefore difficulty of feeding soft textile materials. In fact, the processing of fibre/fabric fluff, because of the low bulk density of the material to be fed to the extruder, requires the use of special and specific feeder to maintain a constant supply or equipment for the pre-compaction of the material. Materials having an appropriate bulk density, such as granulates or pellets, are in fact easier to feed to the extruder and process than fibre/fabric fluff. (Tom Duhoux, Edwin Maes, Martin Hirschnitz-Garbers, Karolien Peeters, Lise Asscherickx, Maarten Christis, Birgit Stubbe, Philippe Colignon, Mandy Hinzmann, Anurodh Sachdeva November - 2021; Study on the technical, regulatory, economic and environmental effectiveness of textile fibres recycling. Final report).

For polyester textile fraying there are specialized recycling lines (comprising melt filtration systems, vacuum degassing for viscosity increase) that can be installed upstream of the melt spinning line (BB Engineering GmbH 2019). This very specialized and economically demanding equipment is aimed at fibre-to-fibre recycling. If the recycling of textile polyester is to be directed towards other applications, the only alternative solution to extrusion with equipment equipped with special feeder and currently available on the market for compaction is agglomeration. For example: the Pallmann Plast-Agglomerator, PFV system, as well as the California Pellet Mill pelletizer, generates pellets with high bulk density to be fed to the extruder starting from lightweight materials previously reduced into fragments or fibres (10/12 mm).

In extrusion the material undergoes thermomechanical degradation resulting in a decrease in the intrinsic viscosity, molecular weight and final properties of the polymer. If the polymer is not adequately pre-treated by drying, a process that involves significant energy consumption, degradation will be greatly increased due to hydrolysis processes. During the agglomeration processes, the degradation, albeit more contained, deriving from the heating generated by friction inside high-speed shredders, is added to the mechanical degradation due to the high fragmentation of the material necessary to feed these machines.

A known process for the production of recycled granules starting from waste textile material is described, for example, in WO 2021/250228 A1. In this, it is envisaged that the starting waste textile material may be composed of material of exclusively natural origin, or material of exclusively synthetic origin or even a mixture of natural and synthetic materials. The process comprises a step of pulverizing the selected waste fabrics, a subsequent step of agglomerating the powder obtained into pellets by using a binder and a final step of extruding a mixture composed of the pellet obtained from the pulverized fabrics together with plastic compounds, also in the form of pellets. The process makes it possible to obtain plastic or plastic-like granules that can be used in place of common plastic granules in all the usual processes for the production of plastic parts such as extrusion, thermoforming, injection moulding processes. However, pulverizing and pelletizing operations are expensive and make the process economically unprofitable.

WO 2023/094456 A1, describes fabrics and a method for the production of fabrics made of polymeric material with embedded textile particles. The production method provides sorting waste fabrics, compacting the material, grinding and extruding to obtain granules.

EP 3475353 B1 provides another method for recycling textile products, in particular carpets.

### SUMMARY OF THE INVENTION

The object of the present invention is to propose a simple and economically advantageous process for the production of granules in recycled plastic material from waste fabrics and/or yarns.

Another object of the present invention is to propose a process for the production of granules in recycled plastic material starting from waste fabrics and/or yarns that is implementable by means of low-cost machinery.

Still an object of the present invention is to propose a process for the production of granules in recycled plastic material starting from waste fabrics and/or yarns that does not cause a degradation of the polymers that form the base of the waste fabrics and yarns.

The above objects are achieved by means of a process according to claim 1.

Preferred embodiments are defined in the dependent claims.

According to a first aspect of the invention, a process for the production of recycled plastic granules starting from waste fabrics and/or yarns comprises the steps of:
a) sorting a quantity of waste fabrics and/or yarns consisting of at least 85% by weight of thermoplastic and/or elastomeric polymers;
b) compacting the selected material by heating at a temperature between 150°C and 310°C and pressure until a slab of recycled predominantly plastic material between 0.5 mm and 30 mm thick is obtained;
c) grinding the slab of predominantly plastic material so as to obtain flakes of recycled predominantly plastic material having a minimum size of not less than 0.5 mm and a maximum size of not more than 30 mm and a bulk density of between 0.3 Kg/liter and 0.8 Kg/liter,
d) extruding the flakes of predominantly plastic material in order to obtain granules of predominantly plastic material.

The method outlined above allows to obtain granules in recycled predominantly plastic material starting from waste fabrics and/or synthetic yarns without the need to fray, card, grind or pulverize the waste fabrics and without the need to compact them by applying cutting stresses so that the process is economically advantageous and the polymers that make up the waste fabrics are not degraded by the process.

According to an embodiment of the invention, the waste fabrics and/or yarns consist of at least 85% by weight of polyesters and/or polyamides and/or polyolefins and/or acrylic polymers and/or polyurethane elastomers.

The materials selected consist of at least 85% by weight of thermoplastic and/or elastomeric polymers with a melting temperature of less than or equal to 310°C. These materials are gradually brought to around the melting temperature, and are then compacted without degrading by applying pressure for a maximum time not exceeding 5 minutes. Impurities of any kind present, in a quantity of less than 15% by weight, even if they have a melting temperature higher than that imposed in the compaction parts, such as for example parts that cannot be melted at operating temperatures (such as cotton, wool, viscose, etc.), remain incorporated in the polymeric matrix that is formed following compaction of the plastic material and do not alter the overall characteristics of the obtained slab of predominantly plastic material.

According to an embodiment of the invention, the step of sorting includes a step of sorting discarded garments and a step of removing non-plastic parts such as buttons, zippers, buckles, studs, or the like.

As previously highlighted, the removal of non-meltable parts such as cotton etc. from waste fabrics and/or yarns is appropriate but not absolutely necessary if the percentage by weight of non-plastic parts is overall less than 15%.

According to an embodiment of the invention, between the step of selecting and the step of compacting there is a step of adding at least one additive chosen among grading, antioxidant and compatibilizer agents to the selected material.

Grading agents are chain-extending additives, useful for increasing the molecular weight and intrinsic viscosity of the polymer. These are low molecular weight polyfunctional additives such as, for example, bisoxazolines (e.g.: 2,2'-bis(2-oxazoline), dianhydrides (e.g.: PMDA pyromellitic dianhydride, PMDI poly(methylene diphenyl diisocyanate, etc.), epoxy compounds (e.g. oligomeric epoxy compounds Mn<3000 multifunctional of styrene-acrylic type).

Antioxidant agents are additives that stabilize the degradation processes of the polymers. These are phosphitic type compounds (e.g. Pentaerythritol tetrakis(3-(3,5-di-tert-butyl-4-hydroxyphenyl)propionate, etc.), phenolic type compounds (e.g. tris(2,4-di-tert.-butylphenyl) phosphite, etc.).

Compatibilizer agents are additives that can be added to polymer blends characterized by poor interfacial adhesion and containing segments that are miscible or compatible with one polymer and segments that are miscible or highly compatible with another polymer in the blend. These are ethylene copolymers (e.g. EVA ethylene-co-vinyl acetate), copolymers containing epoxy groups (e.g. poly(ethylene-co-glycidyl methacrylate), functionalized polyolefins (e.g. maleic anhydride functionalized polyolefins), block copolymers (e.g. SEBS poly(styrene-b- (ethylene-co-butylene)-b-styrene functionalized or not with maleic anhydride (SEBS-g-MAH)).

The usable additives are preferably in the form of powder or granules and can therefore be easily distributed on (and in) the selected waste material when this has been housed in the compacting mould, before the compacting step starts.

According to an embodiment of the invention, the compacting step is done by applying a pressure between 1.5 bar and 30 bar for a time between 1 minute and 3 minutes.

According to an embodiment of the invention, the compacting step includes a pre-compacting step in which the selected material is heated to a temperature between 80°C and 150°C and pressed at a pressure between 1.5 bar and 20 bar for a time between 1 minute and 5 minutes.

To avoid degradation of the polymer, the compacting step takes place gradually by continuously applying a certain pressure for a certain period of time, thus exploiting the visco-elastic properties of the suitably heated polymer. The pre-compacting step can be useful especially when the waste material comprises certain polymers to make compaction even more gradual and avoid degradation of the polymers.

According to an embodiment of the invention, the compacting step takes place in a heated plate heat press.

According to an embodiment of the invention, the grinding step is carried out so as to obtain flakes of recycled predominantly plastic material having a minimum size of not less than 1 mm and a maximum size of not more than 10 mm and bulk density of between 0.4 Kg/liter and 0.8 Kg/liter.

According to an embodiment of the invention, between the grinding step and the extruding step there is a step of sieving the flakes of recycled predominantly plastic material to remove the flakes of recycled predominantly plastic material that do not fall within a certain size tolerance.

The grinding step, which can be advantageously carried out by means of a shredder, allows to obtain the recycled predominantly plastic material in the form of flakes so that the bulk density of the material is the optimal one to feed the extruder. The most suitable shredder can be suitably chosen based on the sizes of the slabs to be treated and based on the sizes of the flakes to be obtained. It is also possible to use low-cost shredders that are not able to guarantee sufficient size homogeneity of the flakes and in this case it is advisable that the grinding step is followed by the sieving step. In this way, waste material is generated, which could still be reused in the process itself in the sorting step, but the cost of the machinery necessary to carry out the process is reduced.

According to an embodiment of the invention, the waste fabrics and/or yarns selected in the sorting step include at least 85% by weight of PET (polyethylene terephthalate) and the heating of the compacting step takes place at a temperature between 250°C and 270°C.

According to a different embodiment of the invention, the waste fabrics and/or yarns selected in the sorting step include at least 85% by weight of PP (polypropylene) and the heating of the compacting step takes place at a temperature between 180°C and 200°C.

The heating temperature of the compacting step is chosen based on the polymer predominantly present in the selected waste fabrics and/or yarns.

According to an embodiment of the invention, the selected waste fabrics and/or yarns consist of at least 85% by weight of a single type of polymer or a polymer blend that have similar melting temperatures (by similar it is meant within a range of 20°C). In this embodiment the heating temperature of the compacting step is within the range of ±20°C with respect to the melting temperature of that polymer or with respect to the average melting temperature of the polymer blend.

### BRIEF DESCRIPTION OF THE DRAWINGS

Further features and advantages of the invention will appear from the following description of embodiments, given by way of non-limiting example, with reference to the accompanying figures, in which:
- FIG. 1 shows a flowchart of an exemplary embodiment of the method of the invention;
- FIG. 2 shows a flowchart of another exemplary embodiment of the method of the invention.

### DETAILED DESCRIPTION OF PREFERRED EMBODIMENTS

In this document, waste fabrics and/or yarns are understood as both semifinished waste from the textile production chain and post-consumer finished textile products such as, by way of example but not limited to, garments, clothing accessories, bath linen, bed linen, home textile products. In the event that the fabrics and/or yarns are taken from the waste of the production chain, their composition is generally known, whereas in the event that they are post-consumer products, the composition can be obtained from the label that accompanies all textile products for personal or domestic use. In the method of the invention, the term synthetic fabrics refers to all those consisting predominantly of thermoplastic and/or elastomeric polymers. By way of example, but not limited to, thermoplastic and/or elastomeric synthetic fabrics are understood to be those comprising in various percentages polyesters (PET, PBT, etc.), polyamides (PA6, PA66, P12, etc.), polyolefins (PE, PP, their copolymers), acrylic polymers (PAN, etc.), polyurethane elastomers (elastane).

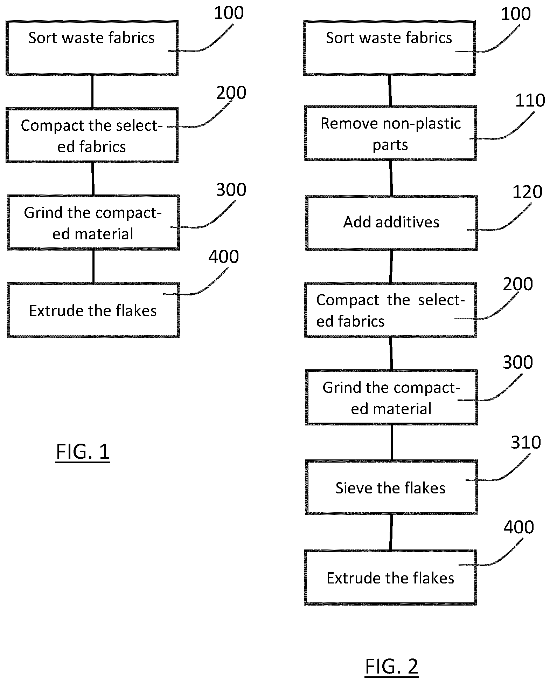

With reference to FIG. 1, according to an embodiment of the invention in a first sorting step, 100, 150 g (about 800 cm²) of waste fabric and/or yarn consisting of polypropylene (PP) sportswear are selected. The garment is used as such since any elements present made of different materials, plastic or not, such as laces, buttons or the labels themselves, are certainly in a percentage by weight of less than 10% of the total weight of the garment. In a compacting step, 200, the selected fabrics are arranged, suitably folded and overlapped to adjust their overall sizes, between the plates of a heat press which is then operated with the following set working parameters: temperature of the plates 190°C, working pressure 10 bar, working time 2.5 minutes. When the heat press plates are opened, a compact slab with a thickness of 2.5 mm and a density of 0.9 g/cm³ is extracted from the machine. In a grinding step, 300, the slab consisting predominantly of PP is ground by means of a shredder so as to obtain flakes having average sizes of 2 mm and bulk density of 0.4 kg/liter. In an extruding step, 400, the obtained flakes are extruded with a single-screw granulator extruder. In the example described, the quantity of waste fabric and/or yarn selected in the sorting step 100 obviously depends on the sizes of the heat press used in the subsequent compacting step 200 and on the sizes of the shredder used in the grinding step 300.

With reference to FIG. 2, according to another exemplary embodiment of the invention, in a first sorting step, 100, 150 g (about 800 cm ²) of waste fabric and/or yarn consisting of recycled PET curtains are selected. A removing step, 110, is carried out to remove metal buttons and eyelets from the selected curtains. The selected fabrics are then arranged, suitably folded and overlapped to adjust their sizes, between the plates of a heat press and a step of adding additives is then carried out, 120, in which 0.2% by weight with respect to the weight of the fabrics of the antioxidant agent Pentaerythritol tetrakis(3-(3,5-di-tert-butyl-4-hydroxyphenyl)propionate and tris(2,4-di-tert.-butylphenyl) and 0.5 by weight with respect to the weight of the fabrics of chain extender consisting of 2,3-Epoxypropyl methacrylate whose trade name is Joncryl^{®} ADR 4468 are added. The compacting step, 200, is then activated, in which the heat press is operated with the following set working parameters: temperature of the plates 260°C, working pressure 5 bar, working time 2 minutes. When the heat press plates are opened, a compact slab with a thickness of 3 mm and a density of 1.2 g/cm³ is extracted from the machine. In a grinding step, 300, the slab consisting predominantly of PET is ground by means of a shredder so as to obtain flakes having average sizes of 5 mm and bulk density of 0.7 kg/liter. Subsequently, in a sieving step, 310, the flakes obtained are fed to a vibrating screen to remove the larger flakes so that at the outlet flakes of average size of 3 mm and bulk density of 0.5 kg/liter are obtained. In an extruding step, 400, the obtained flakes are extruded with a single-screw granulator extruder.

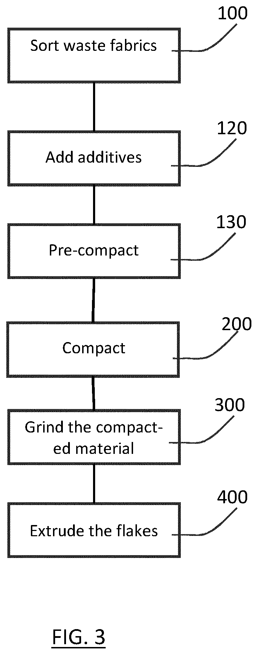

The exemplary embodiments described above describe discontinuous processes at least up to the grinding step 300 to obtain the flakes. However, in one embodiment, the method of the invention provides a substantially continuous mode. With reference to FIG. 3, a sorting step, 100, involves sorting fabrics containing at least 90% by weight of thermoplastic and/or elastomeric polymers and feeding them through a conveyor along a path in which they cross:
- an additive addition station in which, in a step of adding additives, 120, by means of a dosing device, additives and/or antioxidant agents and/or compatibilizer agents are added in liquid or solid formulation;
- a pre-compaction station in which, in a pre-compacting step, 130, they are heated to a temperature between 80°C and 150°C and passed through a first group of pressure rollers to obtain a semi-compact layer between 1 cm and 3 cm thick;
- a compaction station in which, in a compacting step, 200, they are heated to a temperature between 200°C and 300°C and passed through a second group of rollers with an average crossing time between 10 seconds and 60 seconds to obtain a compact layer of a thickness not exceeding 7 mm;
- a grinding station in which in a grinding step, 300, the compact slab is passed through a roller die with a meshed grid of 1 cm x 1 cm;
- an extrusion station in which, in an extruding step, 400, the obtained homogeneous flakes are fed to a granulating extruder.

In an alternative embodiment, the grinding step 30 may take place by means of a reciprocating flat die.

The method of the invention does not provide for the prior fraying process and therefore the material is not degraded in this step. In fact, the material can be fed to the compacting step 200 as pieces of fabric or even directly as whole garments possibly deprived of excess non-plastic parts.

Contrary to what happens in conventional processes, in which in the extruder there is complete melting at high temperature of the fed mass and high shear stresses, the relatively low temperatures to which the waste material is brought and the absence of shear stresses in the densification process lead to less hydrolytic/thermal degradation of the polymer with maintenance of properties, creating a product with high rheological and mechanical performance. Further, the polymer can be processed without a drying pretreatment.

The method of the invention can be carried out in a specially designed continuous machine or with various machines of the prior art having very low costs.

With the method of the invention, the flake material based on recycled thermoplastic and/or elastomeric polymers arrives at the extruder with sizes and bulk density ideal for feeding the extruder and therefore makes it unnecessary to provide specific and expensive extruder feeders.

The above advantages of the method of the invention remain valid even in the presence of further variants with respect to those described above and in accordance with the scope of protection defined by the claims that follow.

## Claims

1. Method for producing plastic granules from recycling of waste fabrics and/or yarns, particularly for use in manufacturing processes of plastics processing, said method comprising steps of:
(a) sorting (100) a quantity of waste fabrics and/or yarns consisting of at least 85% by weight of thermoplastic and/or elastomeric polymers;
(b) compacting (200) the selected material by heating at a temperature between 150°C and 300°C and pressing until a slab of predominantly plastic material between 0.5 mm and 10 mm thick is obtained;
(c) grinding (300) the slab of predominantly plastic material so as to obtain flakes of predominantly plastic material having a minimum size of not less than 0.5 mm, a maximum size of not more than 30 mm, and a bulk density of between 0.3 kg/liter and 0.8 kg/liter,
(d) extruding (400) said flakes of predominantly plastic material so as to obtain granules of predominantly plastic material.

2. Method for producing plastic granules according to claim 1 **characterized in that** said thermoplastic and/or elastomeric polymers are polyesters and/or polyamides and/or polyolefins and/or acrylic polymers and/or polyurethane elastomers.

3. Method for producing plastic granules according to claim 1 or 2 **characterized in that** the sorting step (100) includes a step of sorting discarded garments and a step of removing (110) non-plastic parts such as buttons, zippers, buckles, studs, labels or the like.

4. Method for the production of plastic granules according to one of the previous claims **characterized in that** between the step of selecting (100) and the step of compacting (200) there is a step of adding additives (120) in which at least one additive chosen among grading, antioxidant and compatibilizer agents is added to the selected material.

5. Method for producing plastic granules according to one of the previous claims **characterized in that** the compacting step (200) is done by applying pressure between 1.5 bar and 30 bar for a time between 1 minute and 5 minutes.

6. Method for producing plastic granules according to one of the previous claims **characterized in that** the compacting step includes a pre-compacting step (130) in which the selected material is heated to a temperature between 80°C and 150°C and pressed at a pressure between 1.5 bar and 20 bar for a time between 1 minute and 5 minutes.

7. Method for producing plastic granules according to one of the previous claims **characterized in that** the compacting step (200) takes place in a heated plate heat press.

8. Method for the production of plastic granules according to one of the previous claims **characterized in that** the grinding step (300) is carried out so as to obtain flakes of predominantly plastic material having a minimum size of not less than 1 mm and a maximum size of not more than 10 mm and bulk density between 0.4 kg/liter and 0.8 kg/liter.

9. Method for the production of plastic granules according to one of the previous claims **characterized in that** between the grinding step (300) and the extruding step (400) there is a step of sieving (310) the flakes of predominantly plastic material to remove the flakes of predominantly recycled plastic material that do not fall within a certain size tolerance.

10. Method for the production of plastic granules according to one of the previous claims **characterized in that** the waste fabrics and/or yarns selected in the sorting step (100) include at least 85% by weight of PET (polyethylene terephthalate) and the heating of the compacting step (200) takes place at a temperature between 250°C and 270°C.

11. Method for the production of plastic granules according to one of claims 1 to 9 **characterized in that** the waste fabrics and/or yarns selected in the sorting step (100) include at least 85% by weight of PP (polypropylene) and the heating of the compacting step (200) takes place at a temperature between 180°C and 200°C.

12. Method for the production of plastic granules according to one of the previous claims **characterized in that** the waste fabrics and/or yarns selected in the sorting step (100) consist of at least 85% by weight of a single type of polymer or a polymer blend that have melting temperatures within a range of 20°C, and the heating temperature of the compacting step (200) is within the range of ±20°C from the melting temperature of that polymer or from the average melting temperature of the polymer blend, respectively.

## Patentansprüche

1. Verfahren zur Herstellung von Kunststoffgranulat aus recycelten Textilabfällen und/oder Garnen, insbesondere zur Verwendung in Herstellungsprozessen der Kunststoffverarbeitung, wobei das Verfahren folgende Schritte umfasst:
(a) Sortieren (100) einer Menge an Textilabfällen und/oder Garnen, die zu mindestens 85 Gew.-% aus thermoplastischen und/oder elastomeren Polymeren bestehen;
(b) Verdichten (200) des ausgewählten Materials durch Erhitzen auf eine Temperatur zwischen 150 °C und 300 °C und Pressen, bis eine Platte aus überwiegend Kunststoffmaterial mit einer Dicke zwischen 0,5 mm und 10 mm erhalten wird;
(c) Zerkleinern (300) der Platte aus überwiegend Kunststoffmaterial, um Flocken aus überwiegend Kunststoffmaterial mit einer Mindestgröße von nicht weniger als 0,5 mm, einer Höchstgröße von nicht mehr als 30 mm und einer Schüttdichte zwischen 0,3 kg/Liter und 0,8 kg/Liter zu erhalten,
(d) Extrudieren (400) der Flocken aus überwiegend Kunststoffmaterial, um Granulat aus überwiegend Kunststoffmaterial zu erhalten.

2. Verfahren zur Herstellung von Kunststoffgranulat nach Anspruch 1, **dadurch gekennzeichnet, dass** die thermoplastischen und/oder elastomeren Polymere Polyester und/oder Polyamide und/oder Polyolefine und/oder Acrylpolymere und/oder Polyurethan-Elastomere sind.

3. Verfahren zur Herstellung von Kunststoffgranulat gemäß Anspruch 1 oder 2, **dadurch gekennzeichnet, dass** der Sortierschritt (100) einen Schritt zum Sortieren ausrangierter Kleidungsstücke und einen Schritt zum Entfernen (110) nicht aus Kunststoff bestehender Teile wie Knöpfe, Reißverschlüsse, Schnallen, Nieten, Etiketten oder dergleichen umfasst.

4. Verfahren zur Herstellung von Kunststoffgranulat gemäß einem der vorstehenden Ansprüche, **dadurch gekennzeichnet, dass** zwischen dem Sortierschritt (100) und dem Verdichtungsschritt (200) ein Schritt zum Hinzufügen von Additiven (120) vorgesehen ist, bei dem dem ausgewählten Material mindestens ein Additiv aus der Gruppe der Sortiermittel, Antioxidationsmittel und Kompatibilisierungsmittel zugesetzt wird.

5. Verfahren zur Herstellung von Kunststoffgranulat gemäß einem der vorstehenden Ansprüche, **dadurch gekennzeichnet, dass** der Verdichtungsschritt (200) durch Aufbringen eines Drucks zwischen 1,5 bar und 30 bar über einen Zeitraum zwischen 1 Minute und 5 Minuten durchgeführt wird.

6. Verfahren zur Herstellung von Kunststoffgranulat gemäß einem der vorstehenden Ansprüche, **dadurch gekennzeichnet, dass** der Verdichtungsschritt einen Vorverdichtungsschritt (130) umfasst, bei dem das ausgewählte Material auf eine Temperatur zwischen 80 °C und 150 °C erhitzt und bei einem Druck zwischen 1,5 bar und 20 bar für eine Zeit zwischen 1 Minute und 5 Minuten gepresst wird.

7. Verfahren zur Herstellung von Kunststoffgranulat gemäß einem der vorstehenden Ansprüche, **dadurch gekennzeichnet, dass** der Verdichtungsschritt (200) in einer beheizten Plattenwärmepresse stattfindet.

8. Verfahren zur Herstellung von Kunststoffgranulat gemäß einem der vorstehenden Ansprüche, **dadurch gekennzeichnet, dass** der Zerkleinerungsschritt (300) so durchgeführt wird, dass Flocken aus überwiegend Kunststoffmaterial mit einer Mindestgröße von nicht weniger als 1 mm und einer Höchstgröße von nicht mehr als 10 mm sowie einer Schüttdichte zwischen 0,4 kg/Liter und 0,8 kg/Liter erhalten werden.

9. Verfahren zur Herstellung von Kunststoffgranulat gemäß einem der vorstehenden Ansprüche, **dadurch gekennzeichnet, dass** zwischen dem Zerkleinerungsschritt (300) und dem Extrusionsschritt (400) ein Schritt zum Sieben (310) der Flocken aus überwiegend Kunststoffmaterial vorgesehen ist, um die Flocken aus überwiegend recyceltem Kunststoffmaterial zu entfernen, die nicht innerhalb einer bestimmten Größentoleranz liegen.

10. Verfahren zur Herstellung von Kunststoffgranulat gemäß einem der vorstehenden Ansprüche, **dadurch gekennzeichnet, dass** die im Sortierschritt (100) ausgewählten Abfallgewebe und/oder -garne mindestens 85 Gew.-% PET (Polyethylenterephthalat) enthalten und die Erwärmung im Verdichtungsschritt (200) bei einer Temperatur zwischen 250 °C und 270 °C erfolgt.

11. Verfahren zur Herstellung von Kunststoffgranulat gemäß einem der Ansprüche 1 bis 9, **dadurch gekennzeichnet, dass** die im Sortierschritt (100) ausgewählten Abfallgewebe und/oder -garne mindestens 85 Gew.-% PP (Polypropylen) enthalten und die Erwärmung im Verdichtungsschritt (200) bei einer Temperatur zwischen 180 °C und 200 °C erfolgt.

12. Verfahren zur Herstellung von Kunststoffgranulat gemäß einem der vorstehenden Ansprüche, **dadurch gekennzeichnet, dass** die im Sortierschritt (100) ausgewählten Abfallgewebe und/oder Garne zu mindestens 85 Gew.-% aus einer einzigen Polymersorte oder einem Polymergemisch bestehen, deren Schmelztemperaturen innerhalb eines Bereichs von 20 °C liegen, und dass die Erwärmungstemperatur des Verdichtungsschritts (200) im Bereich von ±20 °C um die Schmelztemperatur dieses Polymers bzw. um die durchschnittliche Schmelztemperatur des Polymergemischs liegt.

## Revendications

1. Procédé de fabrication de granulés de plastique à partir du recyclage de déchets de tissus et/ou de fils, destiné en particulier à être utilisé dans des procédés de fabrication liés à la transformation des matières plastiques, ledit procédé comprenant les étapes suivantes :
(a) le tri (100) d'une quantité de déchets de tissus et/ou de fils composée d'au moins 85 % en poids de polymères thermoplastiques et/ou élastomères ;
(b) le compactage (200) du matériau sélectionné par chauffage à une température comprise entre 150 °C et 300 °C et par pressage jusqu'à l'obtention d'une plaque constituée principalement de matière plastique, d'une épaisseur comprise entre 0,5 mm et 10 mm ;
(c) le broyage (300) de la plaque de matière principalement plastique de manière à obtenir des flocons de matière principalement plastique ayant une taille minimale d'au moins 0,5 mm, une taille maximale d'au plus 30 mm et une densité apparente comprise entre 0,3 kg/litre et 0,8 kg/litre,
(d) extruder (400) lesdits flocons constitués principalement de matière plastique afin d'obtenir des granulés constitués principalement de matière plastique.

2. Procédé de fabrication de granulés de plastique selon la revendication 1, **caractérisé en ce que** lesdits polymères thermoplastiques et/ou élastomères sont des polyesters et/ou des polyamides et/ou des polyoléfines et/ou des polymères acryliques et/ou des élastomères de polyuréthane.

3. Procédé de fabrication de granulés de matière plastique selon la revendication 1 ou 2, **caractérisé en ce que** l'étape de tri (100) comprend une étape de tri des vêtements mis au rebut et une étape d'élimination (110) des éléments non plastiques tels que les boutons, les fermetures à glissière, les boucles, les boutons-pression, les étiquettes ou autres éléments similaires.

4. Procédé de fabrication de granulés de plastique selon l'une des revendications précédentes, **caractérisé en ce qu'**entre l'étape de sélection (100) et l'étape de compactage (200) s'intercale une étape d'ajout d'additifs (120) au cours de laquelle au moins un additif choisi parmi des agents de calibrage, des antioxydants et des agents de compatibilité est ajouté au matériau sélectionné.

5. Procédé de fabrication de granulés de plastique selon l'une des revendications précédentes, **caractérisé en ce que** l'étape de compactage (200) est réalisée en appliquant une pression comprise entre 1,5 bar et 30 bars pendant une durée comprise entre 1 minute et 5 minutes.

6. Procédé de fabrication de granulés de plastique selon l'une des revendications précédentes, **caractérisé en ce que** l'étape de compactage comprend une étape de pré-compactage (130) au cours de laquelle le matériau sélectionné est chauffé à une température comprise entre 80 °C et 150 °C et pressé à une pression comprise entre 1,5 bar et 20 bars pendant une durée comprise entre 1 minute et 5 minutes.

7. Procédé de fabrication de granulés de plastique selon l'une des revendications précédentes, **caractérisé en ce que** l'étape de compactage (200) s'effectue dans une presse à plaques chauffantes.

8. Procédé de fabrication de granulés de plastique selon l'une des revendications précédentes, **caractérisé en ce que** l'étape de broyage (300) est réalisée de manière à obtenir des flocons constitués principalement de matière plastique, ayant une taille minimale d'au moins 1 mm et une taille maximale d'au plus 10 mm, ainsi qu'une densité apparente comprise entre 0,4 kg/litre et 0,8 kg/litre.

9. Procédé de fabrication de granulés de plastique selon l'une des revendications précédentes, **caractérisé en ce qu'**entre l'étape de broyage (300) et l'étape d'extrusion (400) s'intercale une étape de tamisage (310) des flocons constitués principalement de matière plastique afin d'éliminer les flocons constitués principalement de matière plastique recyclée qui ne respectent pas une certaine tolérance dimensionnelle.

10. Procédé de fabrication de granulés de plastique selon l'une des revendications précédentes, **caractérisé en ce que** les déchets de tissus et/ou de fils sélectionnés lors de l'étape de tri (100) contiennent au moins 85 % en poids de PET (polyéthylène téréphtalate) et que le chauffage de l'étape de compactage (200) s'effectue à une température comprise entre 250 °C et 270 °C.

11. Procédé de fabrication de granulés de plastique selon l'une des revendications 1 à 9, **caractérisé en ce que** les déchets de tissus et/ou de fils sélectionnés lors de l'étape de tri (100) contiennent au moins 85 % en poids de PP (polypropylène) et que le chauffage de l'étape de compactage (200) s'effectue à une température comprise entre 180 °C et 200 °C.

12. Procédé de fabrication de granulés de plastique selon l'une des revendications précédentes, **caractérisé en ce que** les déchets de tissus et/ou de fils sélectionnés lors de l'étape de tri (100) sont constitués d'au moins 85 % en poids d'un seul type de polymère ou d'un mélange de polymères dont les températures de fusion se situent dans une plage de 20 °C, et **en ce que** la température de chauffage de l'étape de compactage (200) se situe dans une plage de ± 20 °C par rapport à la température de fusion de ce polymère ou à la température moyenne de fusion du mélange de polymères, respectivement.
